(19) Europäisches Patentamt
European Patent Office
Office européen des brevets

(11) Veröffentlichungsnummer: **0 084 802**
**A1**

(12) # EUROPÄISCHE PATENTANMELDUNG

(21) Anmeldenummer: **83100196.1**

(22) Anmeldetag: **12.01.83**

(51) Int. Cl.³: **C 07 F 7/10**

(30) Priorität: **23.01.82 DE 3202101**

(43) Veröffentlichungstag der Anmeldung: **03.08.83**
**Patentblatt 83/31**

(84) Benannte Vertragsstaaten: **BE DE FR GB IT**

(71) Anmelder: **BAYER AG, Zentralbereich Patente, Marken und Lizenzen, D-5090 Leverkusen 1, Bayerwerk (DE)**

(72) Erfinder: **Buschhaus, Hans-Ulrich, Dr., Morgengraben 2, D-5000 Köln 80 (DE)**
Erfinder: **Findeisen, Kurt, Dr., In der Follmühle 10, D-5068 Odenthal 2 (DE)**
Erfinder: **Bock, Manfred, Dr., Haydnstrasse 18, D-5090 Leverkusen (DE)**

(54) **Neue Diisocyanate und ein Verfahren zu ihrer Herstellung.**

(57) Diisocyanate der allgemeinen Formel

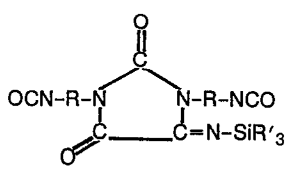

in welcher
R für den Rest eines aliphatischen, cycloaliphatischen oder aromatischen Diisocyanats steht und
R′ einen Alkylrest bedeutet,
sowie ein Verfahren zur Herstellung dieser Diisocyanate durch Umsetzung von Trialkylsilylcyanid mit mindestens 2 Mol eines organischen Diisocyanats bei −25 °C bis 200 °C.



ACTORUM AG

BAYER AKTIENGESELLSCHAFT 5090 Leverkusen, Bayerwerk

Zentralbereich
Patente, Marken und Lizenzen Wr/m-c

## Neue Diisocyanate und ein Verfahren zu ihrer Herstellung

Gegenstand der vorliegenden Erfindung sind Diisocyanate der allgemeinen Formel

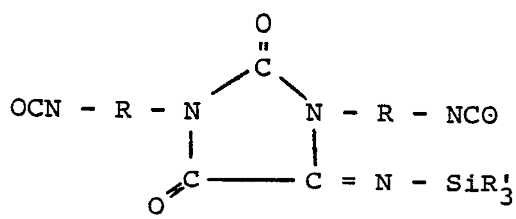

in welcher

R einen aliphatischen Kohlenwasserstoffrest mit 2 bis 12 Kohlenstoffatomen, cycloaliphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 15 Kohlenstoffatomen steht, wobei diese Reste gegebenenfalls durch Halogen-, $C_1$-$C_4$-Alkyl-, Methoxy-, Nitro-, $C_1$-$C_4$-Alkoxycarbonyl- oder Nitrilgruppen substituiert sein können, oder für einen Rest steht, wie er durch Entfernung der Isocyanatgruppen aus einem difunktionellen, endständige Isocyanatgruppen aufweisenden Präpolymeren eines maximalen Molekulargewichts von 600 erhalten worden ist, d.h. für einen, die Isocyanatgruppen eines derartigen Präpolymeren verbindenden Rest steht, und

R' einen Alkylrest

bedeutet.

Gegenstand der Erfindung ist auch ein Verfahren zur Herstellung dieser Diisocyanate, welches dadurch gekennzeichnet ist, daß man 1 Mol Trialkylsilylcyanid der Formel

$$N \equiv C - SiR'_3$$

mit mindestens 2 Mol eines organischen Diisocyanats der Formel

$$R(NCO)_2$$

bei -25°C bis 200°C umsetzt, wobei R und R' die oben genannte Bedeutung haben.

Die neuen erfindungsgemäßen Diisocyanate unterscheiden sich von den, ihnen strukturell nächstliegenden Diisocyanaten gemäß DE-OS 2 329 300 vorteilhaft durch den Umstand, daß sie weder unter Abspaltung physiologisch bedenklicher Spaltprodukte (bei den Diisocyanaten gemäß DE-OS 2 329 300 besteht die Möglichkeit einer Rückspaltung in Ausgangsdiisocyanat und Blausäure) noch unter Anlagerung von Diisocyanten zu Gemischen aus Di- und Triisocyanaten weiter reagieren. Die erfindungsgemäßen Diisocyanate stellen vielmehr eine neue Klasse stabiler Diisocyanate dar, die einen wesentlich niedrigeren Dampfdruck als die einfachen, zu ihrer Herstellung eingesetzten Diisocyanate aufweisen.

Obwohl aus J.Organomet.Chem., 169 (1979), 171-184 bereits bekannt war, daß Trialkylsilylcyanide mit organischen Monoisocyanaten unter Bildung von Imidazolidindionen reagieren, konnte aus dieser, ausschließlich die Umsetzung von Monoisocyanaten mit Trialkylsilylcyaniden betreffenden Vorveröffentlichung nicht hergeleitet werden, daß die erfindungsgemäßen Diisocyanate nach dem erfindungsgemäßen Verfahren zugänglich sein würden.

Bei dem erfindungsgemäßen Verfahren können beliebige organische Diisocyanate der allgemeinen Formel $R(NCO)_2$ eingesetzt werden, wobei R die bereits genannte Bedeutung hat und bevorzugt für einen, gegebenenfalls $C_1$-$C_4$-Alkoxycarbonyl-substituierten aliphatischen Kohlenwasserstoffrest mit 4 - 11 Kohlenstoffatomen, einen cycloaliphatischen Kohlenwasserstoffrest mit 10 - 15 Kohlenstoffatomen oder einen Xylylenrest steht. Bevorzugt einzusetzende Diisocyanate sind z.B. Tetramethylendiisocyanat, Hexamethylendiisocyanat, 1,11-Diisocyanato-undecan, 4,4'-Dicyclohexyldiisocyanat, Bis-(4-Isocyanatocyclohexyl)-methan, m- und p-Xylylendiisocyanat, 3,3,5-Trimethyl-5-isocyanatomethyl-cyclohexylisocyanat (Isophorondiisocyanat), Trimethyl-hexamethylendiisocyanat, 2,6-Diisocyanatocapronsäure-methyl-, -ethyl- oder -butylester. Zu den weniger bevorzugten, erfindungsgemäß jedoch ebenfalls als Ausgangsmaterial geeigneten Diisocyanaten gehören auch difunktionelle NCO-Präpolymere eines maximalen Molekulargewichts von 600, wie sie beispielsweise durch Umsetzung der beispielhaft genannten einfachen Diisocyanate mit unterschüssigen Mengen an, gegebenenfalls Etherbrücken aufweisenden, Alkandiolen in an sich bekannter Weise zugänglich sind. Ein typisches derartiges Diisocyanat wäre beispielsweise das Umsetzungsprodukt von Hexamethylendiisocyanat mit 1,4-Dihydroxybutan unter Einhaltung eines NCO/OH-Äquivalentverhältnisses von 2:1.

Gewünschtenfalls können selbstverständlich auch aromatische Diisocyanate bei der Durchführung des erfindungsgemäßen Verfahrens (mit)verwendet werden, wenn auf Lichtechtheit der Verfahrensprodukte verzichtet wird.

Als geeignete aromatische Diisocyanate seien z.B. genannt: 1-Methylbenzol-2,4-diisocyanat, 1-Methylbenzol-2,6-diisocyanat, die technischen Toluylendiisocyanat-Gemische, m- und p-Phenylendiisocyanat, Naphthylendiisocyanat, Diphenylmethandiisocyanate, Di- und Triisopropylbenzol-diisocyanate, 1-(Isocyanatophenyl)-ethylisocyanat, ferner auch die durch die verschiedensten Substituenten, wie z.B. Alkoxy-, Nitro-, Chlor- oder Brom-substituierten Diisocyanate. Selbstverständlich können bei dem erfindungsgemäßen Verfahren auch beliebige Gemische der beispielhaft genannten Diisocyanate eingesetzt werden.

Reaktionspartner für die Diisocyanate sind beim erfindungsgemäßen Verfahren Trialkylsilylcyanide der Formel

$$N \equiv C - SiR'_3$$

in welcher R' die bereits genannte Bedeutung hat und vorzugsweise für eine $C_1$-$C_4$-Alkylgruppe und insbesondere für eine Methylgruppe steht.

Das erfindungsgemäße Verfahren wird im Temperaturbereich von -25°C bis +200°C, vorzugsweise 25°C bis 180°C, gegebenenfalls in Gegenwart geeigneter Katalysatoren wie z.B. Lewis-Säuren wie Aluminiumchlorid, Eisen(III)-chlorid und/oder in Gegenwart geeigneter Lösungsmitteln durchgeführt. Bei der Durchführung des erfindungsgemäßen Verfahrens können z.B. die Reaktionspartner in Mischung vorgelegt und die Reaktion durch Erwärmung in Gang gesetzt werden.

Man kann z.B. auch so verfahren, daß das Diisocyanat bei erhöhter Temperatur vorgelegt und anschließend mit Trialkylsilylcyanid versetzt wird.

Im allgemeinen kommen beim erfindungsgemäßen Verfahren pro Mol Trialkylsilylcyanid 2 - 50, vorzugsweise 5 -15 Mol Diisocyanat zum Einsatz. Das Ende der zwischen Trialkylsilylcyanid und Diisocyanat ablaufenden Reaktion kann z.B. durch die Beendigung des Rückfließens des Trialkylsilylcyanids oder durch Titration des verbleibenden NCO-Gehaltes bestimmt werden.

Gewünschtenfalls kann nach Beendigung der Reaktion nicht umgesetztes Diisocyanat beispielsweise durch Dünnschicht- oder Rotationsdestillation bzw. durch Extraktion mit Lösungsmitteln, wie z.B. Cyclohexan, Hexan oder Petrolether, entfernt werden. Für viele, nachstehend näher bezeichnete Anwendungsgebiete eignen sich jedoch auch die beim erfindungsgemäßen Verfahren erhältlichen Lösungen der neuen Polyisocyanate in den als Ausgangsverbindungen eingesetzten Diisocyanaten.

Bei erhöhter Temperatur muß auch mit der Bildung von Uretdion- oder Isocyanuratgruppen aufweisenden Polyisocyanaten gerechnet werden. Falls die Bildung dieser Nebenprodukte unerwünscht ist, empfiehlt sich die Durchführung des erfindungsgemäßen Verfahrens bei niedrigen Temperaturen von 25°C - 120°C, wobei die Erhitzung der Reaktionsmasse auf diese Temperatur während ca. 300 - 420 Minuten erfolgt.

Bei Beachtung dieser Vorsichtsmaßnahmen werden nach Entfernung des überschüssigen Ausgangsdiisocyanats Verfahrensprodukte erhalten, welche zu mindestens 70, vorzugsweise mindestens 90 %, aus den Diisocyanaten der oben angegebenen allgemeinen Formel bestehen.

Das erfindungsgemäße Verfahren kann in Substanz oder auch in Anwesenheit eines interten organischen Lösungsmittels durchgeführt werden. Geeignete inerte Lösungsmittel sind z.B. aliphatische und cycloaliphatische Kohlenwasserstoffe, halogenhaltige Kohlenwasserstoffe, wie Methylenclorid, Chloroform, Di- und Trichlorethylen, Aromaten, wie Benzol, Toluol, Xylol, die halogenierten Aromaten, wie Chlorbenzol, Dichlorbenzol und Trichlorbenzol, Dioxan, Essigsäureethylester, Ethylglykolacetat, Aceton, Acetonitril, Dimethylformamid und Mischungen dieser Lösungsmittel.

Die erfindungsgemäßen neuen Polyisocyanate mit 5-Trialkylsilyl-imino-imidazolin-dion-Struktur stellen eine neue Klasse von organischen Polyisocyanaten dar. Die Tatsache,

daß es sich um Verbindungen der eingangs angegebenen allgemeinen Struktur handelt, ergibt sich aus Molekulargewichtsbestimmung sowie infrarot- (Makromol. Chem. 78, 191 (1964)), kernresonanz- und massenspektroskopischen Daten. Die neuen Verbindungen eignen sich als Zwischenprodukte bei der Herstellung von Pflanzenschutzmitteln und insbesondere als wertvolle Ausgangsverbindungen zur Herstellung von Polyurethan-Kunststoffen. Insbesondere stellen die erfindungsgemäßen Polyisocyanate mit aliphatisch gebundenen Isocyanatgruppen wertvolle Ausgangsverbindungen zur Herstellung lichtechter Polyurethan-Lacke und -Folien dar. Die neuen Polyisocyanate weisen eine gute Löslichkeit mit den üblichen Lacklösungsmitteln sowie eine gute Pigmentverträglichkeit auf. Von größter praktischer Bedeutung ist ferner ihr im Vergleich zu den entsprechenden als Ausgangsmaterial verwendeten Diisocyanaten stark verminderter Dampfdruck und ihre hiermit in Zusammenhang stehende physiologische Unbedenklichkeit.

0084802

Beispiel 1

5-Trimethylsilylimino-N,N'-di(isocyanatoisophoryl)-imidazolidindion

666 g (3 Mol) Isophorondiisocyanat werden mit 29,7 g (0,3 Mol) Trimethylsilylcyanid gemischt, 0,5 Stunden bei 130°C und 4 Stunden bei 160°C gerührt und bei 180°C/0,1 Torr im Stickstoffstrom gedünnschichtet. Ausbeute: 143,8 g (88,3 % d. Th.) gelbes Öl, das bei 56°C glasartig erstarrt.

IR = 2250 $cm^{-1}$: NCO
1790, 1740 $cm^{-1}$: C=O
1680 $cm^{-1}$: C=N
1260, 850 $cm^{-1}$: Si

NCO-Gehalt berechnet: 15,5 %, gefunden: 14,9 %.

Beispiel 2

5-Trimethylsilylimino-N,N'-di(6-Isocyanatohexyl)-imidazolidindion

3360 g (20 Mol) 1,6-Diisocyanatohexan werden mit 198 g (2 Mol) Trimethylsilylcyanid gemischt, 30 Minuten bei 120°C und 2 Stunden bei 160°C gerührt und bei 180°C/0,1 Torr im Stickstoffstrom gedünnschichtet.

Hellgelbe Flüssigkeit

Ausbeute: 846 g (97,2 % der Theorie)

NCO-Gehalt ber.: 19,3 %; gef.: 17,1 %.

Patentansprüche:

1. Diisocyanate der allgemeinen Formel

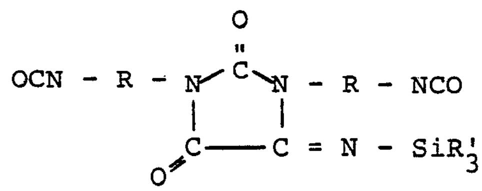

I

in welcher

R einen aliphatischen Kohlenwasserstoffrest mit 2 bis 12 Kohlenstoffatomen, cycloaliphatischen Kohlenwasserstoffrest mit 4 bis 15 Kohlenstoffatomen, aromatischen Kohlenwasserstoffrest mit 6 bis 15 Kohlenstoffatomen oder araliphatischen Kohlenwasserstoffrest mit 7 bis 15 Kohlenstoffatomen steht, wobei diese Reste gegebenenfalls durch Halogen-, $C_1$-$C_4$-Alkyl-, Methoxy-, Nitro-, $C_1$-$C_4$-Alkoxycarbonyl- oder Nitrilgruppen substituiert sein können, oder für einen Rest steht, wie er durch Entfernung der Isocyanatgruppen aus einem difunktionellen, endständige Isocyanatgruppen aufweisenden Präpolymeren eines maximalen Molekulargewichts von 600 erhalten worden ist, und

R' einen Alkylrest

bedeutet.

2. Diisocyanate der Formel gemäß Anspruch 1, dadurch gekennzeichnet, daß

R für eine gegebenenfalls $C_1$-$C_4$-Alkoxycarbonyl-substituierten aliphatischen Kohlenwasserstoffrest mit 4 - 11 Kohlenstoffatomen, einen cycloaliphatischen Kohlenwasserstoffrest mit 10 - 15 Kohlenstoffatomen oder einen Xylylenrest steht und

R' eine Methylgruppe

bedeutet.

3. Verfahren zur Herstellung von Diisocyanaten gemäß Anspruch 1, dadurch gekennzeichnet, daß man 1 Mol Trialkylsilylcyanid der Formel

$$N \equiv C - SiR_3'$$

mit mindestens 2 Mol eines organischen Diisocyanats der Formel

$$R(NCO)_2$$

bei -25°C bis 200°C umsetzt, wobei R und R' die in Anspruch 1 genannte Bedeutung haben.

4. Verfahren zur Herstellung von Diisocyanaten der in Anspruch 1 genannten Formel, dadurch gekennzeichnet, daß man 1 Mol Trialkylsilylcyanid der Formel

$$N \equiv C - SiR_3'$$

mit mindestens 2 Mol eines organischen Diisocyanates der Formel

$$R(NCO)_2$$

bei -25°C bis 200°C umsetzt, wobei R und R' die in Anspruch 2 genannte Bedeutung haben.

0084802

Europäisches Patentamt

# EUROPÄISCHER RECHERCHENBERICHT

Nummer der Anmeldung

EP 83 10 0196

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| A | US-A-3 320 184 (WALTER FINK)<br>* Spalte 4, Zeilen 37-47 *<br>--- | | C 07 F 7/10 |
| D,A | DE-A-2 329 300 (BAYER AG)<br>* Seite 19, Anspruch 1 *<br>----- | | |
| | | | RECHERCHIERTE SACHGEBIETE (Int. Cl. 3) |
| | | | C 07 F 7/00 |

Der vorliegende Recherchenbericht wurde für alle Patentansprüche erstellt.

| Recherchenort | Abschlußdatum der Recherche | Prüfer |
|---|---|---|
| DEN HAAG | 18-04-1983 | SUTER M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82